# EUROPEAN PATENT APPLICATION

(11) **EP 4 083 266 A1**
(43) Date of publication of application: **02.11.2022**
(21) Application number: 20906188.6
(22) Date of filing: 28.10.2020
(51) Int. Cl.: C25B 15/00, C25B 15/02, C01B 3/00, C01B 3/56, C25B 1/02, C25B 9/00

(54) **ELECTROCHEMICAL HYDROGEN PUMP AND CONTROL METHOD THEREFOR**

(30) Priority: 24.12.2019 JP 2019232399
(71) Applicant: Panasonic Intellectual Property Management Co., Ltd., Osaka-shi, Osaka 540-6207 (JP)
(72) Inventor: KAMATA, Tomoya, Osaka (JP); KANI, Yukimune, Osaka (JP)
(74) Representative: Grünecker Patent- und Rechtsanwälte PartG mbB
(86) International application number: PCT/JP2020/040479
(87) International publication number: WO 2021/131312

(57) **Abstract**

An electrochemical hydrogen pump according to the present disclosure includes: a cell including an electrolyte membrane, an anode disposed on a first main surface of the electrolyte membrane, and a cathode disposed on a second main surface of the electrolyte membrane; and a voltage applicator applying a voltage between the anode and the cathode, where, with the voltage applicator applying the voltage, the electrochemical hydrogen pump transfers hydrogen in hydrogen-containing gas supplied to the anode to the cathode and pressurizes the hydrogen; and the electrochemical hydrogen pump includes a controller, when at least one selected from the group consisting of a dew point of the hydrogen-containing gas supplied to the anode and a temperature of the cell is increased, controlling the voltage applied by the voltage applicator to increase a current flowing between the anode and the cathode.

## Description

### Technical Field

The present disclosure relates to an electrochemical hydrogen pump and a method for controlling an electrochemical hydrogen pump.

### Background Art

Recently, due to environmental problems such as global warming and energy problems such as the depletion of petroleum resources, attention has been attracted to hydrogen as a clean alternative energy resource replacing fossil fuels. Even when burnt, hydrogen essentially emits only water and releases no carbon dioxide causing global warming or little nitrogen oxides or the like, and thus hydrogen is expected as clean energy. Examples of an apparatus highly efficiently utilizing hydrogen as a fuel include fuel cells. Fuel cells have been increasingly developed and put into widespread use for automobile power supplies and independent power generation for home use.

In the forthcoming hydrogen-based society, it is desired to develop techniques capable of not only producing hydrogen but also storing hydrogen at a high density and transporting or utilizing hydrogen in small volumes and at a low cost. Particularly, hydrogen supply infrastructures need to be formed to facilitate the widespread use of fuel cells serving as a distributed energy resource. To stably supply hydrogen, various studies of the production, purification, and high-density storage of high-purity hydrogen have been conducted.

For example, hydrogen gas used as fuel gas for fuel cell vehicles and the like is commonly compressed to several tens of MPa. Hydrogen gas is often produced from water through an electrochemical reaction using a water electrolyzer or the like.

For example, PTL 1 discloses a hydrogen purifying/pressurizing system including an electrolyte membrane between an anode and a cathode and in which hydrogen is purified and pressurized by applying a voltage between the anode and the cathode. A stacked structural body constituted by an anode, an electrolyte membrane, and a cathode is referred to as a membrane electrode assembly (hereinafter MEA: Membrane Electrode Assembly may be abbreviated). Here, the hydrogen supplied to the anode may have impurities mixed therein. For example, the hydrogen may be by-produced hydrogen gas from an iron mill or the like or reformed gas reformed from city gas.

### Citation List

### Patent Literature

PTL 1: Japanese Patent No. 6299027

### Summary of Invention

### Technical Problem

The present disclosure has an object to provide, as an example, an electrochemical hydrogen pump that can prevent or reduce the degradation of a cell to a greater degree than in the related art and a method for controlling such an electrochemical hydrogen pump.

### Solution to Problem

To achieve the above-describe object, an electrochemical hydrogen pump of one aspect of the present disclosure includes: a cell including an electrolyte membrane, an anode disposed on a first main surface of the electrolyte membrane, and a cathode disposed on a second main surface of the electrolyte membrane; and a voltage applicator applying a voltage between the anode and the cathode, where, with the voltage applicator applying the voltage, the electrochemical hydrogen pump transfers hydrogen in hydrogen-containing gas supplied to the anode to the cathode and pressurizes the hydrogen; and the electrochemical hydrogen pump includes a controller, when at least one selected from the group consisting of a dew point of the hydrogen-containing gas supplied to the anode and a temperature of the cell is increased, controlling the voltage applied by the voltage applicator to increase a current flowing between the anode and the cathode.

A method for controlling an electrochemical hydrogen pump of one aspect of the present disclosure includes: applying a voltage between an anode and a cathode disposed on respective main surfaces of an electrolyte membrane having a pair of the main surfaces to transfer hydrogen in hydrogen-containing gas supplied to the anode to the cathode and produce compressed hydrogen; and when at least one selected from the group consisting of a dew point of the hydrogen-containing gas supplied to the anode and a temperature of the cell is increased, controlling the voltage applied between the anode and the cathode to increase a current flowing between the anode and the cathode.

### Advantageous Effects of Invention

An electrochemical hydrogen pump of one aspect of the present disclosure has an advantageous effect that it can prevent or reduce the degradation of a cell to a greater degree than in the related art.

### Brief Description of Drawings

[Fig. 1A] Fig. 1A is a table presenting an example of the overvoltage of a cell in a case where the cell temperature and the gas dew point are each changed when the density of a current flowing between an anode and a cathode is 1.0 A/cm².
[Fig. 1B] Fig. 1B is a table presenting an example of the overvoltage of a cell in a case where the cell temperature and the gas dew point are each changed when the density of a current flowing between an anode and a cathode is 1.5 A/cm².
[Fig. 1C] Fig. 1C is a table presenting an example of the overvoltage of a cell in a case where the cell temperature and the gas dew point are each changed when the density of a current flowing between an anode and a cathode is 2.0 A/cm².
[Fig. 1D] Fig. 1D is a table presenting an example of the overvoltage of a cell in a case where the cell temperature and the gas dew point are each changed when the density of a current flowing between an anode and a cathode is 2.5 A/cm².
[Fig. 2] Fig. 2 is a view illustrating an example of an electrochemical hydrogen pump according to a first embodiment.
[Fig. 3] Fig. 3 is a view illustrating an example of the correlation between the temperature of a cell, the proton conductivity (electrical conductivity) of an electrolyte membrane, and the IR loss of the cell.
[Fig. 4] Fig. 4 is a view illustrating an example of the control of a current flowing between an anode and a cathode of an electrochemical hydrogen pump according to a Third Example of the first embodiment.
[Fig. 5] Fig. 5 is a view illustrating an example of an electrochemical hydrogen pump according to a second embodiment.

### Description of Embodiments

In PTL 1, the likelihood of degradation of a cell of an electrochemical hydrogen pump is not sufficiently studied.

In general, as the temperature of a cell is lower and as the water content of an electrolyte membrane is lower, the proton conductivity of the electrolyte membrane of the cell is lower. That is, the proton conductivity of the electrolyte membrane is expressed as the product of the mobility of protons in the electrolyte membrane and the amount of protons transferred in the electrolyte membrane. The temperature of the cell and the mobility of protons in the electrolyte membrane have a positive correlation. Furthermore, the water content in the electrolyte membrane and the amount of protons transferred in the electrolyte membrane have a positive correlation. Thus, for example, because at a time of activation of an electrochemical hydrogen pump, the temperature of the cell and the water content of the electrolyte membrane are often both low, when a current flowing between the anode and the cathode is increased while in such a state where the proton conductivity of the electrolyte membrane is low, a phenomenon in which the overvoltage of the cell becomes greater than or equal to a predetermined voltage is conceivably likely to occur, compared with when the current flowing between the anode and the cathode is increased after the proton conductivity of the electrolyte membrane becomes higher.

It is commonly known that, when the overvoltage of a cell becomes, for example, greater than or equal to a predetermined voltage, the corrosion of a carbon carrier in a catalyst of the cell proceeds and thus that the catalyst of the cell is likely to be degraded.

In view of the foregoing, the present inventors have found that, by appropriately controlling a current flowing between an anode and a cathode based on at least one selected from the group consisting of a dew point of hydrogen-containing gas supplied to the anode and a temperature of a cell, the degradation of the cell of an electrochemical hydrogen pump can be prevented or reduced. This knowledge has been verified by the following experiment.

Each MEA (cell) used in the present experiment was formed by simulating each layer of the MEA of an electrochemical hydrogen pump that will be described in the embodiments below. Thus, a description of the detailed structure of the cell will be omitted.

The present experiment was conducted by using four representative values in terms of current density (1.0 A/cm², 1.5 A/cm², 2.0 A/cm², and 2.5 A/cm²) as parameters of a current flowing between an anode and a cathode and measuring the overvoltage of the cell in cases where the temperature of the cell (hereinafter referred to as "cell temperature Tc") and the dew point of low-pressure hydrogen-containing gas supplied to the anode of the cell (hereinafter referred to as "gas dew point Tg") were each changed.

Here, the gas pressure on the cathode side was fixed to about 1 MPaG and the gas pressure on the anode side was fixed to the pressure required to cause a predetermined flow rate of the hydrogen-containing gas to be circulated through the anode. The overvoltage of the cell was measured with a Compact Wide Range DC Power Supply (manufactured by Kikusui Electronics Corporation, PWR1201L).

However, in the present experiment, a precondition that the gas dew point Tg is less than or equal to the cell temperature Tc (Tg ≤ Tc) was provided. This is due to the following reason.

When the gas dew point Tg is higher than the cell temperature Tc (Tg > Tc), in the anode of the cell, water vapor in the hydrogen-containing gas is condensed and thus can result in the occurrence of the blocking of a flow channel by the condensate water (flooding). Due to the diffusibility of the hydrogen-containing gas being inhibited by flooding in the anode, an increase in the overvoltage of the cell can be caused. As a result, when the overvoltage of the cell becomes greater than or equal to a predetermined voltage (set to 500 mV in the present experiment), the corrosion of a carbon carrier in a catalyst of the cell proceeds, and thus the catalyst of the cell is likely to be degraded.

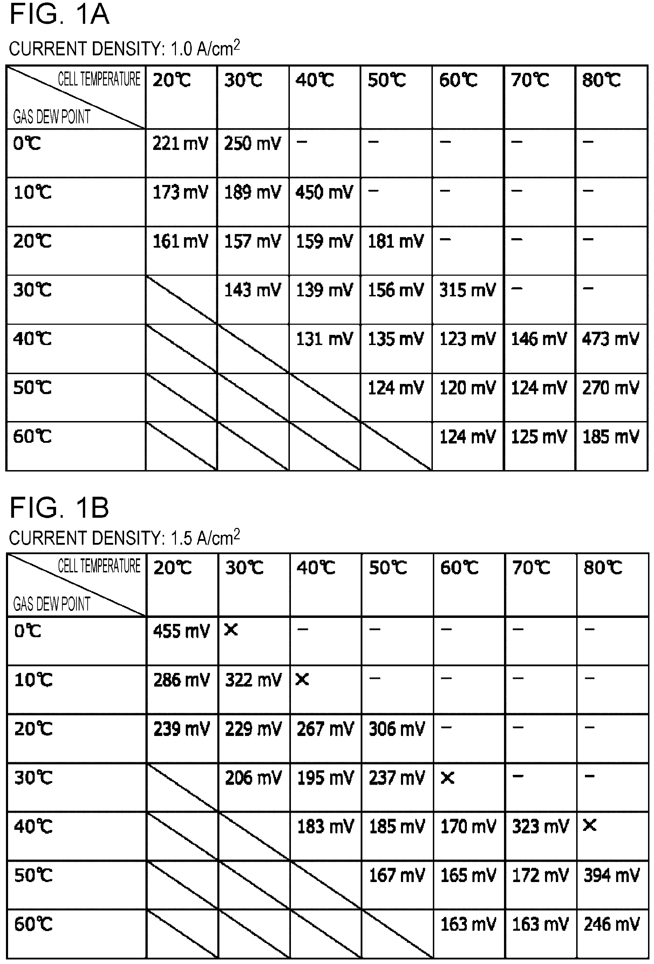

Fig. 1A is a table presenting an example of the overvoltage of a cell in a case where the cell temperature and the gas dew point are each changed when the density of a current flowing between an anode and a cathode is 1.0 A/cm².

Fig. 1B is a table presenting an example of the overvoltage of a cell in a case where the cell temperature and the gas dew point are each changed when the density of a current flowing between an anode and a cathode is 1.5 A/cm².

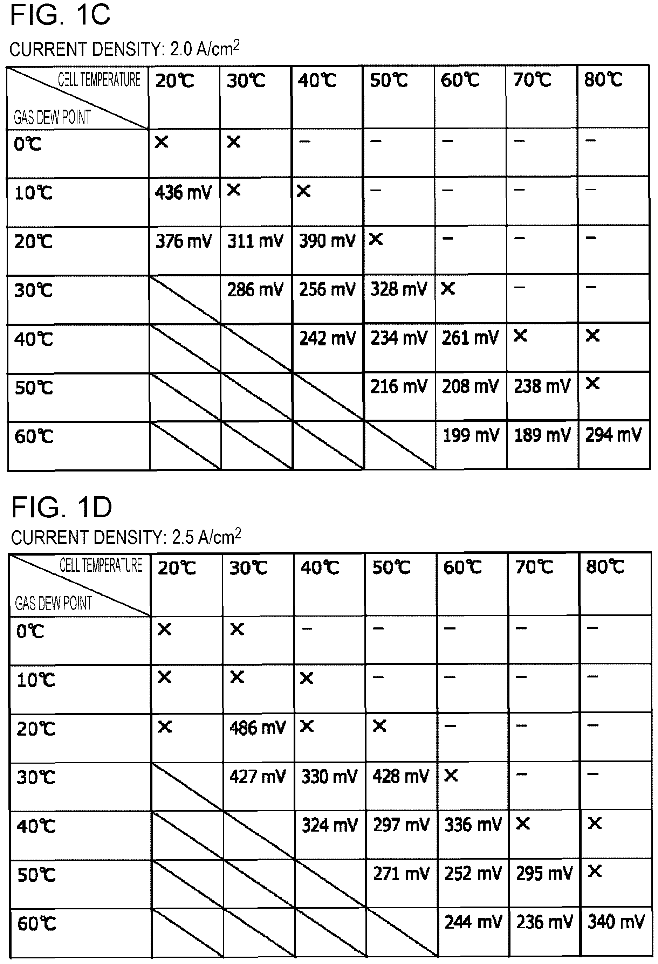

Fig. 1C is a table presenting an example of the overvoltage of a cell in a case where the cell temperature and the gas dew point are each changed when the density of a current flowing between an anode and a cathode is 2.0 A/cm².

Fig. 1D is a table presenting an example of the overvoltage of a cell in a case where the cell temperature and the gas dew point are each changed when the density of a current flowing between an anode and a cathode is 2.5 A/cm².

In each of the tables, as the cell temperature Tc, seven representative temperatures (Tc = 20°C, 30°C, 40°C, 50°C, 60°C, 70°C, and 80°C) were used and, as the gas dew point Tg, seven representative temperatures (Tg = 0°C, 10°C, 20°C, 30°C, 40°C, 50°C, 60°C) were used. The measurement results of the overvoltage of the cell (mV) in cases of combinations of these are each presented.

In each of the tables, the regions where the measurement results of the overvoltage of the cell are greater than or equal to 500 mV were marked with a symbol "X". When, from these regions marked with a symbol "X", the cell temperature Tc is increased without increasing the gas dew point or the gas dew point is decreased without decreasing the cell temperature, the drying-up of the electrolyte membrane of the cell proceeds. Because, as a result, the corrosion of a carbon carrier in the catalyst of the cell proceeds and thus the catalyst of the cell is likely to be degraded, the overvoltage measurement of the cell was stopped. In each of the tables, such unmeasured regions were marked with a symbol "-".

The above-described experiment conditions and the like are intended to be illustrative and are not limited to those in the present example.

Here, as can be understood from the measurement results presented in each of the tables, it was found that, under the condition that the density of the current flowing between the anode and the cathode is low (e.g., Fig. 1A or 1B), even in the case where the gas dew point Tg and the cell temperature Tc are low, the overvoltage of the cell is unlikely to reach the region where the catalyst of the cell is degraded (the region greater than or equal to 500 mV in the present experiment).

In contrast, it was found that, under the condition that the density of the current flowing between the anode and the cathode is high (e.g., Fig. 1C or 1D), when the gas dew point Tg and the cell temperature Tc are low, the overvoltage of the cell is likely to reach the region where the cell is degraded.

As described above, the experiment results can be inferred from the positive correlation between the proton conductivity of the electrolyte membrane, the cell temperature Tc, and the water content of the electrolyte membrane (gas dew point Tg). That is, when the gas dew point Tg and the cell temperature Tc are low, the resistance of the electrolyte membrane becomes higher. However, under the condition that the density of the current flowing between the anode and the cathode is low, the overvoltage of the cell, including the IR loss corresponding to the product of the current and the resistance, often does not reach the region where the catalyst of the cell is degraded. On the contrary, under the condition that the density of the current flowing between the anode and the cathode is high, the overvoltage of the cell often reaches the region where the catalyst of the cell is degraded.

Thus, as the cell temperature Tc and the gas dew point Tg are lower, when the current flowing between the anode and the cathode is increased, the overvoltage of the cell is likely to reach the region where the catalyst of the cell is degraded. In other words, as the cell temperature Tc and the gas dew point Tg are higher, even when the current flowing between the anode and the cathode is increased, the overvoltage of the cell is unlikely to reach the region where the catalyst of the cell is degraded.

According to the above-described measurement results, in view of preventing or reducing the degradation of the catalyst of the cell, it is conceivably more appropriate to increase the current flowing between the anode and the cathode after at least one selected from the group consisting of a cell temperature Tc and a gas dew point Tg is increased from a low status to a high status than to increase the current while in a state where the cell temperature Tc and the gas dew point Tg are low.

That is, an electrochemical hydrogen pump of a first aspect of the present disclosure includes: a cell including an electrolyte membrane, an anode disposed on a first main surface of the electrolyte membrane, and a cathode disposed on a second main surface of the electrolyte membrane; and a voltage applicator applying a voltage between the anode and the cathode, where, with the voltage applicator applying the voltage between the anode and the cathode, the electrochemical hydrogen pump transfers hydrogen in hydrogen-containing gas supplied to the anode to the cathode and pressurizes the hydrogen; and the electrochemical hydrogen pump includes a controller, when at least one selected from the group consisting of a dew point of the hydrogen-containing gas supplied to the anode and a temperature of the cell is increased, controlling the voltage applied by the voltage applicator to increase a current flowing between the anode and the cathode.

According to the foregoing structure, the electrochemical hydrogen pump of the present aspect can prevent or reduce the degradation of the cell to a greater degree than in the related art.

For example, because the water content in the electrolyte membrane and the amount of protons transferred in the electrolyte membrane have a positive correlation, when the current flowing between the anode and the cathode is increased while in a state where the dew point of the hydrogen-containing gas supplied to the anode is low, due to an increase in the overvoltage of the cell, the likelihood of degradation of the catalyst of the cell is increased. Furthermore, because the temperature of the cell and the mobility of protons in the electrolyte membrane have a positive correlation, when the current is increased while in a state where the temperature of the cell is low, due to an increase in the overvoltage of the cell, the likelihood of degradation of the catalyst of the cell is increased.

Thus, the electrochemical hydrogen pump of the present aspect is capable of reducing the likelihood of the overvoltage of the cell reaching the region where the catalyst of the cell is degraded by increasing the current flowing between the anode and the cathode after at least one selected from the group consisting of a dew point of the hydrogen-containing gas supplied to the anode and a temperature of the cell is increased, compared with when the current is increased while in a state where the dew point and the temperature are low.

According to an electrochemical hydrogen pump of a second aspect of the present disclosure, in the electrochemical hydrogen pump according to the first aspect, when the dew point of the hydrogen-containing gas supplied to the anode is greater than or equal to a first threshold value, the controller controls the voltage applied by the voltage applicator to increase the current flowing between the anode and the cathode; and when the dew point of the hydrogen-containing gas supplied to the anode is less than the first threshold value, the controller controls the voltage applied by the voltage applicator not to increase the current.

According to this structure, the electrochemical hydrogen pump of the present aspect can be arranged such that the degradation of the cell is unlikely to occur by appropriately controlling the increase and decrease in the current flowing between the anode and the cathode based on the comparison between the dew point of the hydrogen-containing gas supplied to the anode and the first threshold value.

According to an electrochemical hydrogen pump of a third aspect of the present disclosure, in the electrochemical hydrogen pump of the first or second aspect, when the temperature of the cell is greater than or equal to a second threshold value, the controller controls the voltage applied by the voltage applicator to increase the current flowing between the anode and the cathode; and when the temperature of the cell is less than the second threshold value, the controller controls the voltage applied by the voltage applicator not to increase the current.

In the electrochemical hydrogen pump, for example, when the pump is controlled such that the relative humidity of the electrolyte membrane and the density of the current flowing between the anode and the cathode are constant, as the temperature of the cell is increased, the proton conductivity (electrical conductivity) of the electrolyte membrane is increased. Specifically, when the temperature of the cell is greater than or equal to a predetermined temperature, the IR loss of the cell is sufficiently decreased. Details will be described in a Second Example.

Thus, the electrochemical hydrogen pump of the present aspect is capable of enhancing the efficiency of the hydrogen pressurizing operation by increasing the current flowing between the anode and the cathode at greater than or equal to the second threshold value where the IR loss of the cell is sufficiently decreased.

The electrochemical hydrogen pump of the present aspect can be arranged such that the degradation of the cell is unlikely to occur by appropriately controlling the increase and decrease in the current flowing between the anode and the cathode based on the comparison between the temperature of the cell and the second threshold value.

An electrochemical hydrogen pump of a fourth aspect of the present disclosure, in the electrochemical hydrogen pump of any one of the first to third aspects, may include a dew point adjuster adjusting the dew point of the hydrogen-containing gas supplied to the anode, where the controller may control the dew point adjuster to adjust the dew point of the hydrogen-containing gas supplied to the anode less than or equal to the temperature of the cell.

According to the structure, the electrochemical hydrogen pump of the present aspect can prevent or reduce the degradation of a cell to a greater degree than in the related art.

Specifically, when the dew point of the hydrogen-containing gas supplied to the anode is higher than the temperature of the cell, in the anode, water vapor in the hydrogen-containing gas is condensed and thus can result in the occurrence of the blocking of a flow channel by the condensate water (flooding). Due to the diffusibility of the hydrogen-containing gas being inhibited by flooding in the anode, an increase in the overvoltage of the cell can be caused. As a result, when the overvoltage of the cell becomes greater than or equal to a predetermined voltage, the corrosion of a carbon carrier in the catalyst of the cell proceeds, and thus the cell is likely to be degraded.

Thus, in the electrochemical hydrogen pump of the present aspect, by controlling the dew point of the hydrogen-containing gas supplied to the anode to less than or equal to the temperature of the cell, the occurrence of flooding in the anode is prevented or reduced.

According to an electrochemical hydrogen pump of a fifth aspect of the present disclosure, in the electrochemical hydrogen pump of any one of the first to fourth aspects, the controller may control the voltage applied by the voltage applicator when the current flowing between the anode and the cathode is increased from 0 to a predetermined value, to increase rate of the current higher as the current is lower.

The reason for such voltage control is that, as the current flowing between the anode and the cathode is lower, the likelihood of the overvoltage (IR loss component) of the cell reaching the region where the catalyst of the cell is degraded is reduced even when the increase rate of the current is high.

Thus, the electrochemical hydrogen pump of the present aspect is capable of performing the appropriate prevention or reduction of the degradation of the cell and a rapid increase in the current of the cell. For example, at a time of activation of the electrochemical hydrogen pump, the temperature of the cell and the water content of the electrolyte membrane are often both low. However, even in this case, when the current flowing between the anode and the cathode is low, the increase rate of the current can be made higher without accompanying the degradation of the cell, and as a result, the electrochemical hydrogen pump can be efficiently activated.

An electrochemical hydrogen pump of a sixth aspect of the present disclosure, in the electrochemical hydrogen pump of any one of the first to fifth aspects, may include a dew point adjuster adjusting the dew point of the hydrogen-containing gas supplied to the anode, where the controller may control the dew point adjuster to increase the dew point of the hydrogen-containing gas supplied to the anode according to an increase in the temperature of the cell.

According to the structure, the electrochemical hydrogen pump of the present aspect is capable of reducing the likelihood of the drying-up of the electrolyte membrane, compared with when the dew point of the hydrogen-containing gas supplied to the anode is not increased according to an increase in the temperature of the cell.

That is, a method for controlling an electrochemical hydrogen pump of a seventh aspect of the present disclosure includes: applying a voltage between an anode and a cathode disposed on respective main surfaces of an electrolyte membrane having a pair of the main surfaces to transfer hydrogen in hydrogen-containing gas supplied to the anode to the cathode and produce compressed hydrogen; and when at least one selected from the group consisting of a dew point of the hydrogen-containing gas supplied to the anode and a temperature of the cell is increased, controlling the voltage applied between the anode and the cathode to increase a current flowing between the anode and the cathode.

According to the structure, in the method for controlling an electrochemical hydrogen pump of the present aspect, the degradation of the cell can be prevented or reduced to a greater degree than in the related art.

Hereinafter, embodiments of the present disclosure will be described with reference to the attached drawings. The embodiments described below each illustrate an example of the above-described aspects. Thus, for example, the shapes, the materials, the constituent elements, and the arrangement and connection modes of the constituent elements that are described below are merely an example, and are not intended to limit the above-described aspects as long as they are not described in the claims. Among the constituent elements described below, the constituent elements that are not described in the independent claims expressing the broadest concept of the above-described aspects will be described as optional constituent elements. In the drawings, the description of constituent elements having the same reference numeral may be omitted. The drawings schematically illustrate each constituent element to facilitate understanding, and thus, for example, the shapes and the dimensional ratios may not be precise depictions.

### (First Embodiment)

### [Apparatus Structure]

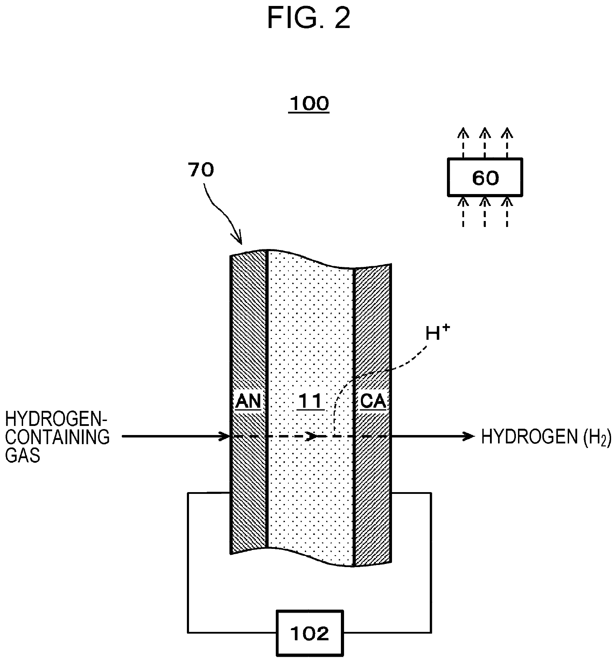

Fig. 2 is a view illustrating an example of an electrochemical hydrogen pump according to a first embodiment.

In the example illustrated in Fig. 2, an electrochemical hydrogen pump 100 according to the present embodiment includes a cell 70, a voltage applicator 102, and a controller 60.

The electrochemical hydrogen pump 100 may include a stack constituted by a plurality of cells 70. Details will be described later.

The cell 70 includes an electrolyte membrane 11, an anode AN, and a cathode CA.

The anode AN is disposed on a first main surface of the electrolyte membrane 11. The anode AN is an electrode including an anode catalyst layer and an anode gas diffusion layer. The cathode CA is disposed on a second main surface of the electrolyte membrane 11. The cathode CA is an electrode including a cathode catalyst layer and a cathode gas diffusion layer. Thus, the electrolyte membrane 11 is sandwiched between the anode AN and the cathode CA such that it is in contact with each of the anode catalyst layer and the cathode catalyst layer.

The electrolyte membrane 11 may have any structure as long as it is a film having proton conductivity. Examples of the electrolyte membrane 11 include a fluorine polymer electrolyte membrane and a hydrocarbon electrolyte membrane. Specifically, as the electrolyte membrane 11, for example, a Nafion (registered trademark, manufactured by DuPont de Nemours, Inc.) or an Aciplex (registered trademark, manufactured by Asahi Kasei Corporation) can be used, but it is not limited thereto.

The anode catalyst layer is disposed on the first main surface of the electrolyte membrane 11. The anode catalyst layer contains carbon capable of supporting a catalyst metal (e.g., platinum) in a dispersed state, but it is not limited thereto.

The cathode catalyst layer is disposed on the second main surface of the electrolyte membrane 11. The cathode catalyst layer contains carbon capable of supporting a catalyst metal (e.g., platinum) in a dispersed state, but it is not limited thereto.

Examples of the method for preparing a catalyst for the cathode catalyst layer and the anode catalyst layer include various methods, but are not particularly limited. Examples of carbon powder include powder such as of graphite, carbon black, and activated carbon having electrical conductivity. The method for making a carbon carrier support platinum or another catalyst metal is not particularly limited. For example, a method such as powder mixing or liquid-phase mixing may be used. Examples of the latter, namely, liquid phase mixing, include a method in which a carrier such as carbon is dispersed in a catalyst component colloid liquid and thereafter adsorption is performed. The supported state of a catalyst metal such as platinum on a carbon carrier is not particularly limited. For example, the catalyst metal may be micronized and thereafter be supported on the carrier in a highly dispersed state.

The cathode gas diffusion layer is disposed on the cathode catalyst layer. The cathode gas diffusion layer is composed of a porous material and has electrical conductivity and gas diffusibility. The cathode gas diffusion layer desirably has elasticity to appropriately follow the displacement and deformation of constituent members occurring, during the operation of the electrochemical hydrogen pump 100, due to the differential pressure between the cathode CA and the anode AN. As the base material for the cathode gas diffusion layer, for example, a carbon fiber sintered body can be used, but it is not limited thereto.

The anode gas diffusion layer is disposed on the anode catalyst layer. The anode gas diffusion layer is composed of a porous material and has electrical conductivity and gas diffusivity. The anode gas diffusion layer desirably has rigidity sufficiently capable of withstanding the pressing of the electrolyte membrane 11 occurring, during the operation of the electrochemical hydrogen pump 100, due to the above-described differential pressure. As the base material for the anode gas diffusion layer, for example, a carbon particle sintered body can be used, but it is not limited thereto.

The voltage applicator 102 is an apparatus applying a voltage between the anode AN and the cathode CA. The voltage applicator 102 may have any structure as long as it is capable of applying a voltage between the anode AN and the cathode CA. In the example illustrated in Fig. 2, a high-potential-side terminal of the voltage applicator 102 is connected to the anode AN and a low-potential-side terminal of the voltage applicator 102 is connected to the cathode CA. Thus, using the voltage applicator 102, energization is performed between the anode AN and the cathode CA. As a result, with the voltage applicator 102 applying a voltage between the anode AN and the cathode CA, the electrochemical hydrogen pump 100 according to the present embodiment transfers hydrogen in hydrogen-containing gas supplied to the anode AN to the cathode CA and pressurizes the hydrogen.

Examples of the voltage applicator 102 include a DC/DC converter and an AC/DC converter. A DC/DC converter is used when the voltage applicator 102 is connected to a direct-current power supply such as a solar cell, a fuel cell, or a battery. An AC/DC converter is used when the voltage applicator 102 is connected to an alternating-current power supply such as a commercial power supply.

Furthermore, the voltage applicator 102 may be, for example, a power-type power supply in which a voltage applied between the anode AN and the cathode CA and a current flowing between the anode AN and the cathode CA are adjusted such that the power supplied to the cell 70 has a predetermined set value.

The controller 60, when at least one selected from the group consisting of a dew point of the hydrogen-containing gas supplied to the anode AN and a temperature of the cell 70 is increased, controls the voltage applied by the voltage applicator 102 to increase a current flowing between the anode AN and the cathode CA.

The controller 60, for example, includes an arithmetic circuit (not illustrated) and a memory circuit memorizing a control program (not illustrated). Examples of the arithmetic circuit include an MPU and a CPU. Examples of the memory circuit include a memory. The controller 60 may be constituted by a single controller performing centralized control or may be constituted by a plurality of controllers working with each other to perform distributed control.

Although not illustrated in Fig. 1, members and equipment required for the hydrogen pressurizing operation of the electrochemical hydrogen pump 100 are appropriately disposed.

For example, a pair of separators may sandwich the anode AN and the cathode CA of the cell 70 from the outside. In this case, the separator in contact with the anode AN is a sheet-shaped electrically conductive member for supplying hydrogen-containing gas to the anode AN. This sheet-shaped member includes a gas flow channel through which the hydrogen-containing gas supplied to the anode AN flows. The separator in contact with the cathode CA is a sheet-shaped electrically conductive member for leading out hydrogen from the cathode CA. This sheet-shaped member includes a gas flow channel through which hydrogen led out from the cathode CA flows. These gas flow channels can be disposed separately from the separators, but are commonly provided by forming grooves of the gas flow channels on the surfaces of the separators in, for example, a serpentine shape.

In the electrochemical hydrogen pump 100, sealing members such as gaskets are normally disposed on both sides of the cell 70 and assembled in advance such that they are integrated with the cell 70 to prevent high-pressure hydrogen from leaking to the outside. The above-described separators for mechanically fixing the cell 70 and electrically connecting adjacent cells 70 to each other in series are disposed outside the cells 70.

In a common stacked structure, the cells 70 and the separators are alternately stacked to form a stacked body (stack) constituted by about greater than or equal to 10 and less than or equal to 200 cells 70. The stacked body is thereafter sandwiched between end plates with current collecting plates and insulating plates interposed therebetween, and both the end plates are tightened with a tightening rod. In this case, to supply an appropriate amount of hydrogen-containing gas to the gas flow channel of each of the separators, it is necessary to be arranged such that a groove-like branched path is branched from an appropriate pipeline in each of the separators and the downstream end of the groove-like branched path is connected to the gas flow channel of each of the separators. Such a pipeline is referred to as a manifold, and the manifold is constituted by a series of through-holes formed at each appropriate position of the separators.

The electrochemical hydrogen pump 100 may include, for example, a temperature detector detecting the temperature of the cell 70, a temperature adjuster adjusting the temperature of the cell 70, and a dew point adjuster adjusting the dew point of hydrogen-containing gas supplied to the anode AN. Details of the dew point adjuster will be described in a second embodiment.

Examples of the temperature detector include a thermocouple and a thermistor, but are not limited thereto.

Examples of the temperature adjuster include an apparatus circulating a heating medium at an appropriate temperature through a flow channel formed in the separators, but are not limited thereto. The temperature adjuster may be a combination of a heater heating the cell 70 (e.g., an electric heater) and a cooler cooling the cell 70 (e.g., a cooling fan).

The above-described members and equipment (not illustrated) are intended to be illustrative and are not limited to those in the present example.

### [Operation]

Hereafter, an example of the hydrogen pressurizing operation of the electrochemical hydrogen pump 100 will be described with reference to the drawings.

The following operation may be performed by, for example, causing the arithmetic circuit of the controller 60 to read a control program from the memory circuit of the controller 60. However, the following operation is not necessarily required to be performed by the controller 60. An operator may perform a part of the operation.

First, low-pressure hydrogen-containing gas is supplied to the anode AN of the electrochemical hydrogen pump 100 and the voltage applied by the voltage applicator 102 is fed to the electrochemical hydrogen pump 100.

As a result, in the anode catalyst layer of the anode AN, hydrogen molecules are separated into protons and electrons (formula (1)). The protons are conducted in the electrolyte membrane 11 and transferred to the cathode catalyst layer. The electrons are transferred to the cathode catalyst layer through the voltage applicator 102.

In the cathode catalyst layer, hydrogen molecules are produced again (formula (2)). It is known that when protons are conducted in the electrolyte membrane 11, a predetermined amount of water, as electroosmotic water, is transferred from the anode AN to the cathode CA along with the protons.

Here, the hydrogen (H₂) produced in the cathode (CA) can be pressurized by increasing the pressure loss in a hydrogen lead-out path using a flow rate adjuster (not illustrated). Examples of the flow rate adjuster include a back pressure valve and a control valve disposed in the hydrogen lead-out path. In this case, the expression "increasing the pressure loss in a hydrogen lead-out path" refers to decreasing the opening of a back pressure valve and a control valve disposed in the hydrogen lead-out path.

Anode: H₂ (low pressure) → 2H⁺ + 2e⁻ ··· (1)

Cathode: 2H⁺ + 2e⁻ → H₂ (high pressure) ··· (2)

In this manner, with the voltage applicator 102 applying the voltage, the hydrogen pressurizing operation of the electrochemical hydrogen pump 100 where hydrogen in hydrogen-containing gas supplied to the anode AN is pressurized in the cathode CA is performed. In this hydrogen pressurizing operation, when at least one selected from the group consisting of a dew point of the hydrogen-containing gas supplied to the anode AN and a temperature of the cell 70 is increased, the voltage applied by the voltage applicator 102 is controlled such that a current flowing between the anode AN and the cathode CA is increased.

The hydrogen pressurized in the cathode CA is temporarily stored in, for example, a hydrogen reservoir (not illustrated). The hydrogen stored in the hydrogen reservoir is supplied to a hydrogen-demanding unit when appropriate. Examples of the hydrogen-demanding unit include a fuel cell generating electricity using hydrogen.

As described above, the electrochemical hydrogen pump 100 according to the present embodiment can prevent or reduce the degradation of the cell 70 to a greater degree than in the related art.

For example, because the water content in the electrolyte membrane 11 and the amount of protons transferred in the electrolyte membrane 11 have a positive correlation, when the current flowing between the anode AN and the cathode CA is increased while in a state where the dew point of the hydrogen-containing gas supplied to the anode AN is low, due to an increase in the overvoltage of the cell 70, the likelihood of degradation of the catalyst of the cell 70 is increased. Furthermore, because the temperature of the cell 70 and the mobility of protons in the electrolyte membrane 11 have a positive correlation, when the current is increased while in a state where the temperature of the cell 70 is low, due to an increase in the overvoltage of the cell 70, the likelihood of degradation of the catalyst of the cell 70 is increased.

Thus, the electrochemical hydrogen pump 100 according to the present embodiment is capable of reducing the likelihood of the overvoltage of the cell reaching the region where the catalyst of the cell 70 is degraded by increasing the current flowing between the anode AN and the cathode CA after at least one selected from the group consisting of a dew point of the hydrogen-containing gas supplied to the anode AN and a temperature of the cell 70 is increased, compared with when the current is increased while in a state where the dew point and the temperature are low.

### (First Example)

An electrochemical hydrogen pump 100 according to a First Example is the same as the electrochemical hydrogen pump 100 according to the first embodiment except for the control content of the controller 60 described below.

When the dew point of the hydrogen-containing gas supplied to the anode AN is greater than or equal to a first threshold value, the controller 60 controls the voltage applied by the voltage applicator 102 to increase the current flowing between the anode AN and the cathode CA; and when the dew point of the hydrogen-containing gas supplied to the anode AN is less than the first threshold value, the controller 60 controls the voltage applied by the voltage applicator 102 not to increase the current.

The first threshold value can be set to an appropriate value where the degradation of the cell of the electrochemical hydrogen pump is unlikely to occur by, for example, taking into account the tables presented in Figs. 1A to 1D or the like based on operating conditions such as the amount of hydrogen pressurized by the electrochemical hydrogen pump.

Accordingly, the electrochemical hydrogen pump 100 according to the present Example can be arranged such that the degradation of the cell 70 is unlikely to occur by appropriately controlling the increase and decrease in the current flowing between the anode AN and the cathode CA based on the comparison between the dew point of the hydrogen-containing gas supplied to the anode AN and the first threshold value.

The electrochemical hydrogen pump 100 according to the present Example may be the same as the electrochemical hydrogen pump 100 according to the first embodiment except for the above-described characteristics.

### (Second Example)

An electrochemical hydrogen pump 100 according to a Second Example is the same as the electrochemical hydrogen pump 100 according to the first embodiment except for the control content of the controller 60 described below.

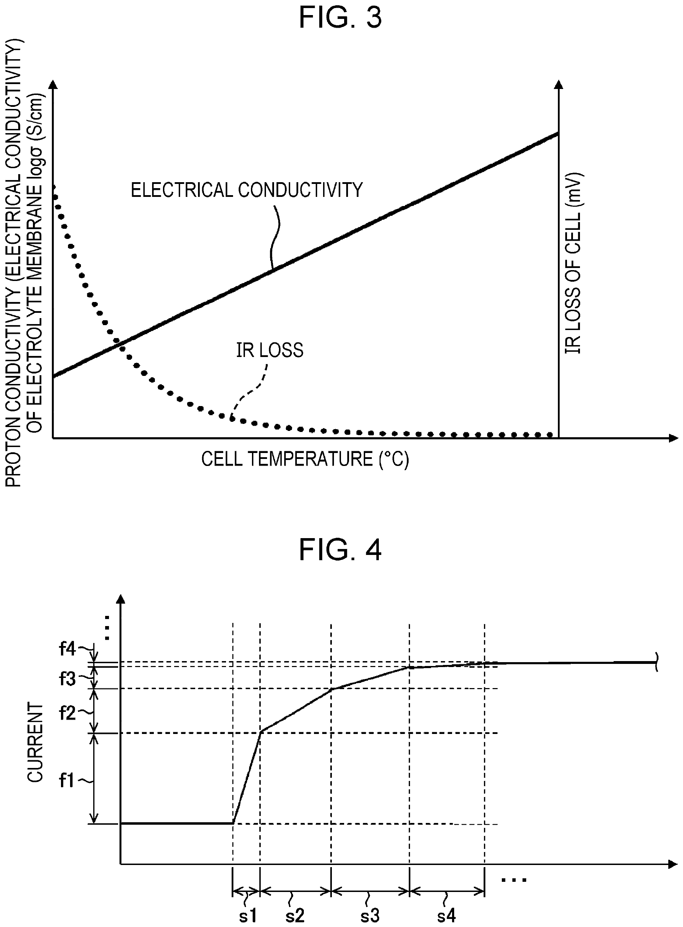

Fig. 3 is a view illustrating an example of the correlation between the temperature of a cell, the proton conductivity (electrical conductivity) of an electrolyte membrane, and the IR loss of the cell. The horizontal axis of Fig. 3 represents the temperature of the cell 70. The left vertical axis of Fig. 3 represents the proton conductivity of the electrolyte membrane 11 and the right vertical axis of Fig. 3 represents the IR loss of the cell 70. Fig. 3 illustrates the foregoing correlation when the relative humidity of the electrolyte membrane 11 and the density of the current flowing between the anode AN and the cathode CA are constant. For example, the relative humidity of the electrolyte membrane 11 can be kept constant by increasing and decreasing the dew point of the hydrogen-containing gas as the temperature of the cell 70 is increased and decreased.

As can be understood from Fig. 3, in the electrochemical hydrogen pump 100, for example, when the pump is controlled such that the relative humidity of the electrolyte membrane 11 and the density of the current flowing between the anode AN and the cathode CA are constant, as the temperature of the cell 70 is increased, the proton conductivity (electrical conductivity) of the electrolyte membrane 11 is increased. Specifically, it can be understood that when the temperature of the cell 70 is greater than or equal to a predetermined temperature, the IR loss of the cell 70 is sufficiently decreased.

Thus, when the temperature of the cell 70 is greater than or equal to a second threshold value, the controller 60 controls the voltage applied by the voltage applicator 102 to increase the current flowing between the anode AN and the cathode CA; and when the temperature of the cell 70 is less than the second threshold value, the controller 60 controls the voltage applied by the voltage applicator 102 not to increase the current.

Accordingly, the electrochemical hydrogen pump 100 according to the present Example is capable of enhancing the efficiency of the hydrogen pressurizing operation by increasing the current flowing between the anode AN and the cathode CA at greater than or equal to the second threshold value where the IR loss of the cell 70 is sufficiently decreased. In this case, the second threshold value can be set to an appropriate value where the efficiency of the hydrogen pressuring operation of the electrochemical hydrogen pump 100 is enhanced by, for example, taking into account the correlation between the temperature of the cell 70 and the IR loss of the cell 70 or the like based on operating conditions such as the amount of hydrogen pressurized by the electrochemical hydrogen pump.

The electrochemical hydrogen pump 100 according to the present Example can be arranged such that the degradation of the cell 70 is unlikely to occur by appropriately controlling the increase and decrease in the current flowing between the anode AN and the cathode CA based on the comparison between the temperature of the cell 70 and the second threshold value. In this case, the second threshold value can be set to an appropriate value where the degradation of the cell of the electrochemical hydrogen pump is unlikely to occur by, for example, taking into account the tables presented in Figs. 1A to 1D or the like based on operating conditions such as the amount of hydrogen pressurized by the electrochemical hydrogen pump.

The electrochemical hydrogen pump 100 according to the present Example may be the same as the electrochemical hydrogen pump 100 according to the first embodiment or the First Example of the first embodiment except for the above-described characteristics.

### (Third Example)

An electrochemical hydrogen pump 100 according to a Third Example is the same as the electrochemical hydrogen pump 100 according to the first embodiment except for the control content of the controller 60 described below.

Fig. 4 is a view illustrating an example of the control of the current flowing between the anode and the cathode of the electrochemical hydrogen pump according to the Third Example of the first embodiment.

In the electrochemical hydrogen pump according to the present Example, in an example, as presented in Fig. 4, a period when the current flowing between the anode AN and the cathode CA is increased from 0 to a predetermined value at a time of activation is divided into n sub-periods (s1, s2, ···, sn: n is a natural number) and increments in the current during the n sub-periods are defined as f1, f2, ···, fn (n is a natural number). Furthermore, n ratios determined from an increment (fx) in the current corresponding to a sub-period selected from the n sub-periods (sx) and the selected sub-period (sx) are defined as rx (rx = fx/sx: x is a natural number represented by 1 ≤ x ≤ n). When, of optional two ratios selected from the n ratios rx, the ratio on the lower-current side is defined as a first ratio and the ratio on the higher-current side is defined as a second ratio, the voltage applied by the voltage applicator 102 is controlled such that the second ratio is smaller than the first ratio. That is, the voltage applied by the voltage applicator 102 is controlled by setting the ratio r to r = f1/s1 ≥ f2/s2 ≥ f3/s3 ≥ f4/s4 ··· to make the change in the current over time become more gradual with the passage of time from the starting time of activation.

Thus, in the electrochemical hydrogen pump 100 according to the present Example, the controller 60 controls the voltage applied by the voltage applicator 102 when the current flowing between the anode AN and the cathode CA is increased from 0 to a predetermined value, make an increase rate of the current higher as the current is lower.

The reason for such voltage control is that, as the current flowing between the anode AN and the cathode CA is lower, the likelihood of the overvoltage (IR loss component) of the cell 70 reaching the region where the catalyst of the cell 70 is degraded is reduced even when the increase rate of the current is high.

Thus, the electrochemical hydrogen pump 100 according to the present Example is capable of performing the appropriate prevention or reduction of the degradation of the cell 70 and a rapid increase in the current of the cell 70. For example, at a time of activation of the electrochemical hydrogen pump 100, the temperature of the cell 70 and the water content of the electrolyte membrane 11 are often both low. However, even in this case, when the current flowing between the anode AN and the cathode CA is low, the increase rate of the current can be made higher without accompanying the degradation of the cell 70, and as a result, the electrochemical hydrogen pump 100 can be efficiently activated.

The electrochemical hydrogen pump 100 according to the present Example may be the same as the electrochemical hydrogen pump 100 according to the first embodiment or the First or Second Example of the first embodiment except for the above-described characteristics.

### (Second Embodiment)

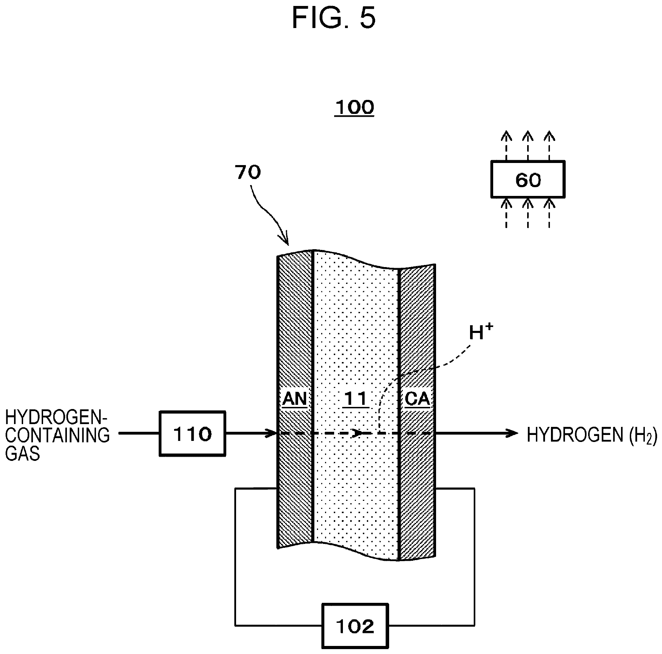

Fig. 5 is a view illustrating an example of an electrochemical hydrogen pump according to a second embodiment.

In the example illustrated in Fig. 5, an electrochemical hydrogen pump 100 according to the present embodiment includes a cell 70, a voltage applicator 102, a dew point adjuster 110, and a controller 60.

Here, the cell 70 and the voltage applicator 102 are the same as those according to the first embodiment, and thus the description thereof will be omitted.

The dew point adjuster 110 is an apparatus adjusting a dew point of the hydrogen-containing gas supplied to the anode AN. The dew point adjuster 110 may have any structure as long as it can adjust the dew point of the hydrogen-containing gas.

For example, the dew point adjuster 110 may include a humidifier humidifying hydrogen-containing gas. Examples of the humidifier include a humidifier having a bubbler structure in which hydrogen-containing gas is humidified by being passed through hot water and a humidifier having a structure in which hydrogen-containing gas is humidified using a moisture permeable membrane. When including a humidifier having the foregoing bubbler structure, the dew point adjuster 110 is capable of appropriately adjusting the dew point of hydrogen-containing gas according to the temperature of the hot water.

Furthermore, the dew point adjuster 110 may be a mixer mixing high-humidity hydrogen-containing gas released from the anode AN and low-humidity hydrogen-containing gas supplied from an outside hydrogen supply source to adjust the dew point of the mixed gas. Here, the hydrogen-containing gas from the outside hydrogen supply source may be produced, for example, using a water electrolyzer.

The controller 60 controls the dew point adjuster 110 to adjust the dew point of the hydrogen-containing gas supplied to the anode AN less than or equal to the temperature of the cell 70.

Accordingly, the electrochemical hydrogen pump 100 according to the present embodiment can prevent or reduce the degradation of the cell 70 to a greater degree than in the related art. Specifically, when the dew point of the hydrogen-containing gas supplied to the anode AN is higher than the temperature of the cell 70, in the anode AN, water vapor in the hydrogen-containing gas is condensed and thus can result in the occurrence of the blocking of a flow channel by the condensate water (flooding). Due to the diffusibility of the hydrogen-containing gas being inhibited by flooding in the anode AN, an increase in the overvoltage of the cell 70 can be caused. As a result, when the overvoltage of the cell 70 becomes greater than or equal to a predetermined voltage, the corrosion of a carbon carrier in the catalyst of the cell 70 proceeds, and thus the cell 70 is likely to be degraded.

Thus, in the electrochemical hydrogen pump 100 according to the present embodiment, by controlling the dew point of the hydrogen-containing gas supplied to the anode AN to less than or equal to the temperature of the cell 70, the occurrence of flooding in the anode AN is prevented or reduced.

The electrochemical hydrogen pump 100 according to the present embodiment may be the same as the electrochemical hydrogen pump 100 according to the first embodiment or any one of the First to Third Examples of the first embodiment except for the above-described characteristics.

### (Modified Example)

An electrochemical hydrogen pump 100 according to the present Modified Example is the same as the electrochemical hydrogen pump 100 according to the second embodiment except for the control content of the controller 60 described below.

The controller 60 controls the dew point adjuster 110 to increase the dew point of the hydrogen-containing gas supplied to the anode AN according to an increase in the temperature of the cell 70.

Accordingly, the electrochemical hydrogen pump 100 according to the present Modified Example is capable of reducing the likelihood of the drying-up of the electrolyte membrane 11, compared with when the dew point of the hydrogen-containing gas supplied to the anode AN is not increased according to an increase in the temperature of the cell 70.

The electrochemical hydrogen pump 100 according to the present Modified Example may be the same as the electrochemical hydrogen pump 100 according to the first embodiment, any one of the First to Third Examples of the first embodiment, or the second embodiment except for the above-described characteristics.

The first embodiment, the First to Third Examples of the first embodiment, the second embodiment, and the Modified Example of the second embodiment may be combined with one another unless they are mutually exclusive.

From the foregoing description, many improvements and other embodiments of the present disclosure are apparent to those skilled in the art. Thus, the foregoing description should be understood merely as illustrative and are provided for the purpose of teaching the best modes for carrying out the present disclosure to those skilled in the art. Details of the structures and/or functions of the present disclosure can be substantially changed without departing from the spirit of the present disclosure.

### Industrial Applicability

One aspect of the present disclosure can be utilized as an electrochemical hydrogen pump that can prevent or reduce the degradation of a cell to a greater degree than in the related art.

### Reference Signs List

11 electrolyte membrane
60 controller
70 cell
100 electrochemical hydrogen pump
102 voltage applicator
110 dew point adjuster
AN anode
CA cathode

## Claims

1. An electrochemical hydrogen pump comprising: a cell including an electrolyte membrane, an anode disposed on a first main surface of the electrolyte membrane, and a cathode disposed on a second main surface of the electrolyte membrane; and a voltage applicator applying a voltage between the anode and the cathode,
wherein, with the voltage applicator applying the voltage, the electrochemical hydrogen pump transfers hydrogen in hydrogen-containing gas supplied to the anode to the cathode and pressurizes the hydrogen; and
the electrochemical hydrogen pump includes a controller, when at least one selected from the group consisting of a dew point of the hydrogen-containing gas supplied to the anode and a temperature of the cell is increased, controlling the voltage applied by the voltage applicator to increase a current flowing between the anode and the cathode.

2. The electrochemical hydrogen pump according to Claim 1, wherein, when the dew point of the hydrogen-containing gas supplied to the anode is greater than or equal to a first threshold value, the controller controls the voltage applied by the voltage applicator to increase the current; and when the dew point of the hydrogen-containing gas supplied to the anode is less than the first threshold value, the controller controls the voltage applied by the voltage applicator not to increase the current.

3. The electrochemical hydrogen pump according to Claim 1 or 2, wherein, when the temperature of the cell is greater than or equal to a second threshold value, the controller controls the voltage applied by the voltage applicator to increase the current; and when the temperature of the cell is less than the second threshold value, the controller controls the voltage applied by the voltage applicator not to increase the current.

4. The electrochemical hydrogen pump according to any one of Claims 1 to 3, comprising a dew point adjuster adjusting the dew point of the hydrogen-containing gas supplied to the anode,
wherein the controller controls the dew point adjuster to adjust the dew point of the hydrogen-containing gas supplied to the anode less than or equal to the temperature of the cell.

5. The electrochemical hydrogen pump according to any one of Claims 1 to 4, wherein the controller controls the voltage applied by the voltage applicator when the current flowing between the anode and the cathode is increased from 0 to a predetermined value, to increase rate of the current higher as the current is lower.

6. The electrochemical hydrogen pump according to any one of Claims 1 to 5, comprising a dew point adjuster adjusting the dew point of the hydrogen-containing gas supplied to the anode,
wherein the controller controls the dew point adjuster to increase the dew point of the hydrogen-containing gas supplied to the anode according to an increase in the temperature of the cell.

7. A method for controlling an electrochemical hydrogen pump, the method comprising: applying a voltage between an anode and a cathode disposed on respective main surfaces of an electrolyte membrane having a pair of the main surfaces to transfer hydrogen in hydrogen-containing gas supplied to the anode to the cathode and produce compressed hydrogen; and when at least one selected from the group consisting of a dew point of the hydrogen-containing gas supplied to the anode and a temperature of the cell is increased, controlling the voltage applied between the anode and the cathode to increase a current flowing between the anode and the cathode.
